# EUROPÄISCHE PATENTSCHRIFT

(11) **EP 4 211 758 B1**
(45) Veröffentlichungstag und Bekanntmachung des Hinweises auf die Patenterteilung: **13.11.2024**
(21) Anmeldenummer: 21801836.4
(22) Anmeldetag: 14.10.2021
(51) Int. Cl.: H01R 43/28, B23P 19/00

(54) **KABELVERARBEITUNGSCENTER**
WIRE PROCESSING CENTER
CENTRE DE TRAITEMENT DE CÂBLES

(30) Priorität: 14.10.2020 DE 102020127082; 25.01.2021 DE 102021101497; 13.10.2021 WO PCT/EP2021/078364
(43) Veröffentlichungstag der Anmeldung: 19.07.2023
(73) Patentinhaber: Zoller & Fröhlich GmbH, 88239 Wangen im Allgäu (DE)
(72) Erfinder: Dr. FRÖHLICH, Christoph, 88239 Wangen (DE); MENNIG, Michael, 88410 Bad Wurzach (DE); LEUPOLZ, Hans, 88260 Argenbühl (DE); HARTINGER, Steffen, 88239 Wangen (DE)
(74) Vertreter: Winter, Brandl - Partnerschaft mbB
(86) Internationale Anmeldenummer: PCT/EP2021/078549
(87) Internationale Veröffentlichungsnummer: WO 2022/079215

(56) Entgegenhaltungen:
- EP-A1- 1 341 269
- EP-A1- 1 403 983
- EP-A1- 1 403 983
- DE-A1- 102018 131 444
- DE-A1- 102018 131 444
- DE-U1- 9 304 398
- DE-U1- 9 304 398
- JP-A- S58 135 743
- JP-A- S58 135 743

## Beschreibung

Die Erfindung betrifft Kabelverarbeitungscenter zur Konfektion von Kabeln, die beispielsweise in Schaltschränken verlegt werden sollen.

Mit einem derartigen Center können Kabel, Leitungen zugeführt, abgelängt, mit einer Markierung versehen und mit einem Kontaktelement, beispielsweise einer Aderendhülse vercrimpt werden. Die konfektionierten Kabel werden dann üblicher Weise gebündelt und in einer Speicheranordnung aufgenommen. Ein derartiges Center ist beispielsweise in der US 8,442,664 B1 offenbart. Die eigentliche Kabelkonfektion erfolgt über eine Einheit, die als Sondermaschine ausgeführt ist und die vorbeschriebenen Arbeitsschritte ermöglicht. Eine derartige Einheit hat einen äußerst komplexen Aufbau und ist nur mit großem Aufwand an unterschiedliche Fertigungsaufgaben anpassbar. Des Weiteren ist eine derartige Sondermaschine relativ teuer und bedarf eines großen Bauraums innerhalb der Fertigungsstraße.

Eine ähnliche Lösung ist in der EP 0 132 092 A1 beschrieben. Diese offenbart eine Einrichtung zur Herstellung von Kabelbäumen, bei der Kabel/Leitungen mittels einer Kabelzuführeinrichtung und Kontaktelemente mittels einer weiteren Zuführeinrichtung zugeführt werden. Die Kabel werden mittels einer Ablängeinrichtung abgelängt und über einen Crimpautomaten mit Kontaktelementen vercrimpt. Zur Weiterverarbeitungen werden die konfektionierten Kabel dann über eine Mess- und Zuführeinrichtung weiter transportiert. Ein Crimpkopf und ein das Kontaktelement während des Crimpens aufnehmendes Formwerkzeug sind als getrennte Einheiten ausgeführt, wobei in die den Crimpkopf aufnehmende Einheit Ablängeinrichtung integriert ist. Diese Einrichtung zeigt die gleichen Nachteile wie die vorstehend beschriebenen Sondermaschine.

In der Druckschrift US 6 662 444 B2 sind ein Verfahren und eine Vorrichtung offenbart, wobei ein Endabschnitt eines Kabels entweder mit einem Kontaktelement vercrimpt und/oder ein anderer Endabschnitt mit einem Stecker verpresst werden kann. Die dabei verwendete Vorrichtung hat eine Drahtzuführeinrichtung, über die Drähte abgelängt und die entsprechenden Endabschnitte zur Kontaktierung mit einem Crimpterminal oder dem Stecker abisoliert werden. Das Ablängen erfolgt mittels eines Cutters, die abgelängten Kabel/Drähte werden dann U-förmig gebogen und an einem Zwischenspeicher positioniert, von dem die Kabel einer weiteren Vorrichtung zum Verpressen/Vercrimpen zugeführt werden.

Auch bei dieser Lösung handelt es sich um eine Sondermaschine, die konkret für den vorbestimmten Zweck ausgelegt ist.

Das Dokument US 5 878 469 A betrifft eine Einrichtung zum Bearbeiten von Kabelbäumen, die eine Ablängeinrichtung, einen Stripper, eine Art Crimpeinheit und eine Einrichtung zum Verbinden mit einem Stecker aufweist. Auch diese Lösung ist als Sondermaschine konzipiert und nicht oder nur mit erheblichen Aufwand an andere Fertigungsaufgaben anpassbar.

Eine flexiblere Lösung besteht darin, anstelle einer Sondermaschine modulare Einheiten vorzusehen, an denen dann über einen Werker die einzelnen Verarbeitungsschritte (Ablängen, Markieren, Abisolieren, Crimpen, Bündeln) durchgeführt werden. Das Crimpen erfolgt mit einer Crimpmaschine, wie beispielsweise aus der Patentschrift DE 44 40 835 C1 der Anmelderin bekannt und dient beispielsweise dazu, Aderendhülsen mit einem abisolierten Kabelende zu verpressen. Diese Aderendhülsen werden bei der bekannten Lösung als Gurtband auf einem Trommelmagazin aufgerollt und von diesem über eine Transporteinheit zu einem Crimpkopf gefördert. Alternativ können die Aderendhülsen bzw. Kontaktelemente auch vereinzelt in einem Speicher aufgenommen sein und dann über eine geeignete Zuführeinrichtung lagedefiniert zum Crimpkopf gefördert werden. Eine derartige Zuführeinrichtung ist beispielsweise in der DE 198 31 588 A1 beschrieben.

Die zu vercrimpende Aderendhülse wird bei den bekannten Lösungen mittels einer Halteeinheit auf das abisolierte Kabelende aufgesetzt und dann über den Crimpkopf verpresst. Das Abisolieren des Kabelendes kann entweder extern oder über einen in die Crimpmaschine integrierten Abisolierkopf erfolgen.

Die vorbeschriebenen modularen Einheiten sind als Standalone-Einheiten ausgeführt, die beispielsweise jeweils mit eigenen Antriebseinheiten versehen sind und somit üblicherweise unabhängig von weiteren Bearbeitungseinheiten betrieben werden.

Der Aufbau einer Transporteinheit zum Fördern der auf einem Gurtband angeordneten Aderendhülsen oder sonstiger elektrischer Bauteile ist beispielsweise in der Druckschrift G 93 08 266.5 der Anmelderin beschrieben. Eine ähnliche Transporteinheit ist auch in der DE 197 14 964 C1 offenbart.

Die US-Patentanmeldung US 2010/0 293 780 A1 zeigt eine verfahrbare Einheit, über die zu verarbeitende Kontaktelemente in dem Bereich einer stationären, als Sondermaschine ausgeführten Kabelkonfektioniereinrichtung positionierbar sind.

In der Serienproduktion ist es erforderlich, unterschiedliche Kabelquerschnitte und elektrische Bauelemente/Kontaktelemente miteinander zu verpressen und dann in einem folgenden Montagschritt, beispielsweise beim Montieren eines Schaltschranks zu verbauen. Hierzu verbleiben prinzipiell zwei Möglichkeiten: Bei einer Variante wird die Crimpmaschine zum Verpressen unterschiedlicher Kabelquerschnitte und/oder Kontaktelemente (Aderendhülsen) umgerüstet oder aber es werden mehrere Crimpmaschinen zur Verarbeitung der unterschiedlichen Kabelquerschnitte/Kontaktelemente vorgesehen. Die erstgenannte Lösung bedarf hoher Rüstzeiten und eines erheblichen Personalaufwandes. Dieser Nachteil wird bei der letztgenannten Lösung mit einer Vielzahl von Crimpmaschinen überwunden - die Investitionskosten sind jedoch erheblich.

In der Druckschrift DE 10 2004 057 818 B3 ist eine Maschine (als Stripper, Crimper ausgeführt) offenbart, mit der unterschiedliche Kabelquerschnitte und Aderendhülsen verarbeitbar sind. Dabei sind für jeden Aderendhülsentyp ein Trommelmagazin und eine zugehörige Crimpeinrichtung vorgesehen, denen ein gemeinsamer Antrieb zugeordnet ist, der wahlweise in Wirkeingriff mit einer der Crimpeinrichtungen bringbar ist. Eine derartige Lösung bedarf eines hohen vorrichtungstechnischen Aufwandes, da eine Vielzahl von Crimpeinrichtungen bereitgestellt und angesteuert sein muss.

In der auf die Anmelderin zurückgehenden DE 10 2015 119 217 A1 ist eine Crimpmaschine gezeigt, mit der die oben genannten Nachteile beseitigt sind. Diese Crimpmaschine hat eine Speicheranordnung mit mehreren Trommelmagazinen, denen eine gemeinsame Transporteinheit und ein gemeinsamer Crimpkopf zugeordnet sind, so dass der vorrichtungstechnische Aufwand gegenüber der vorbeschriebenen Lösung deutlich verringert ist.

In der DE 10 2017 118 968 der Anmelderin ist eine Crimpmaschine offenbart, bei der ein zu vercrimpendes Kontaktelement ohne Zwischenschaltung einer Zubringeinrichtung oder dergleichen direkt in den Wirkungsbereich eines Abisolier- oder Crimpkopfs geführt ist. Bei dieser bekannten Lösung sind die Kontaktelemente vorzugsweise in Trommelmagazinen gespeichert, so dass entsprechend die Crimpmaschine mit einer Vereinzelungseinrichtung ausgeführt ist.

Die ebenfalls auf die Anmelderin zurückgehende DE 10 2015 102 060 A1 zeigt eine Crimpmaschine, bei der unterschiedliche Aderendhülsen in einer Speicheranordnung mit mehreren Trommelmagazinen vorgehalten werden. Jedem dieser Trommelmagazine ist eine Transporteinheit zugeordnet, über die die jeweils vorgewählte Aderendhülse in eine Übergabeposition transportiert wird. Die dort abgetrennte Aderendhülse wird dann mittels eines Shuttle zu einem gemeinsamen Crimpkopf geführt.

Diese Crimpmaschine zeichnet sich durch eine hohe Produktivität aus. Ein gewisser Nachteil wird jedoch darin gesehen, dass das benötigte Shuttle vergleichsweise komplex aufgebaut ist und dementsprechenden Bauraum beansprucht und keine Abisolierung möglich ist.

Aufgrund des hohen manuellen Arbeitsanteiles sind die Anforderungen an Werker beim Konfektionieren und insbesondere beim sich anschließenden Verlegen der Kabel im Schaltschrank relativ hoch, wobei Fehler nicht auszuschließen sind.

In der WO 2019/061562 A1 der Anmelderin wird zur Überwindung der Nachteile der vorbeschriebenen Konzepte ein modulares Kabelverarbeitungscenter vorgeschlagen, bei den die Bearbeitungsmodule auf einer mobilen Plattform angeordnet sind.

Ein derartiges Konzept ist zwar sehr flexibel an unterschiedliche Fertigungsaufgaben anpassbar, eine weitgehende Automatisierung ohne Einbindung eines Werkers / einer Werkerin ist jedoch nur schwierig realisierbar.

JP S58 135743 A offenbart ein Kabelverarbeitungscenter gemäß dem Oberbegriff von Anspruch 1.

Demgegenüber liegt der Erfindung die Aufgabe zugrunde, ein Kabelverarbeitungscenter zu schaffen, das eine weitgehend automatisierte Kabelkonfektion ermöglicht.

Diese Aufgabe wird durch ein Kabelverarbeitungscenter mit den Merkmalen des Patentanspruchs 1 gelöst Vorteilhafte Weiterbildungen der Erfindung sind Gegenstand der Unteransprüche.

Das erfindungsgemäße Kabelverarbeitungscenter hat eine Vielzahl von Bearbeitungsmodulen, die mittels einer gemeinsamen Steuereinheit und einer entsprechend ausgelegten Software ansteuerbar sind. Die Bearbeitungsmodule sind ausgelegt, beispielsweise Kabel mit unterschiedlichen Querschnitten zu konfektionieren, Kabelenden mit Kontakten oder dergleichen zu versehen und gegebenenfalls die konfektionierten Kabel mit einer Information zu versehen. Das Kabelverarbeitungscenter hat des Weiteren einen Speicher für die zu bearbeitenden Kabelquerschnitte und/oder die fertig bearbeiteten, konfektionierten Kabel. Gemäß der Erfindung sind die Bearbeitungsmodule auf einem Rundtisch positioniert, der mittels eines Antriebs verstellbar ist, um jeweils ein Bearbeitungsmodul mit Bezug zu einer im Umfangsbereich des Rundtischs angeordneten Bearbeitungsstation auszurichten.

Das erfindungsgemäße Konzept löst sich somit von herkömmlichen Lösungen, bei denen das zu konfektionierende Kabel sozusagen von einem Werker den

Bearbeitungsmodulen zugeführt wird und verbringt stattdessen die Bearbeitungsmodule zu einer zentralen Bearbeitungsstation, oder richtet die Bearbeitungsmodule mit Bezug zur Bearbeitungsstation aus. Ein derartiges Kabelverarbeitungscenter lässt sich in einer sehr kompakten Bauweise ausführen, da der Platzbedarf der Bearbeitungsmodule auf dem Rundtisch minimal ist und des Weiteren der vorrichtungstechnische Aufwand für das Fördern der Kabel zwischen den Bearbeitungsstationen entfällt.

In einer nicht beanspruchten Alternative ist es auch möglich, die Bearbeitungsstation, beispielsweise einen Roboter, zentral und die Bearbeitungsmodule umfangseitig anzuordnen, sodass der Roboter über den Rundtisch zu den Bearbeitungsmodulen ausgerichtet wird. Erfindungsgemäß ist die Bearbeitungsstation entlang des Umfangs des Rundtischs verfahrbar angeordnet.

Die Verarbeitung ist weiter optimiert, wenn die Bearbeitungsstation mit einem Handlingsgerät ausgeführt ist, das ausgelegt ist, Kabel aus dem Speicher zu entnehmen und an das jeweilige, an der Bearbeitungsstation befindliche Bearbeitungsmodul zu übergeben oder aus einem Bearbeitungsmodul zu entnehmen und an ein weiteres Bearbeitungsmodul oder einem Entnahmespeicher zu übergeben.

Bei einer bevorzugten Lösung ist das Handlingsgerät derart ausgelegt, dass das zu konfektionierende Kabel beim Verstellen des Rundtischs in einer Zwischenposition gehalten wird.

Die Bearbeitungsmodule können beispielsweise ein Ablängautomat, ein Crimpautomat, eine Tüllenstation, eine Druckstation oder ein Abisolierautomat sein.

Die Ansteuerung ist besonders flexibel, wenn das Handlingsgerät ein von der Steuereinheit angesteuerter Roboter ist.

Die Kosten des Systems lassen sich weiter minimieren, wenn zumindest einige der Bearbeitungsmodule einzeln betreibbare Standard-Bearbeitungseinheiten sind, die im Prinzip auch in Alleinstellung funktionsfähig sind.

Bei einem Ausführungsbeispiel der Erfindung ist der Entnahmespeicher oder der Speicher mit den Kabel-Rohlingen als Köcher-Speicher ausgeführt. Selbstverständlich können auch andere geeignete Speicher, wie beispielsweise ein linear aufgebauter Speicher verwendet werden.

Dabei wird es bevorzugt, diesen Köcher-Speicher mobil auszuführen, so dass ein entsprechender Kabelsatz extern vorbereitet und dann in einer Zugriffsposition an der Bearbeitungsstation stationiert werden kann.

Bevorzugte Ausführungsbeispiele der Erfindung werden im Folgenden anhand schematischer Zeichnungen näher erläutert. Es zeigen:
Figur 1 das Grundkonzept des erfindungsgemäßen Kabelverarbeitungscenters und
Figur 2 ein nicht beanspruchtes Ausführungsbeispiel eines Kabelverarbeitungscenters.

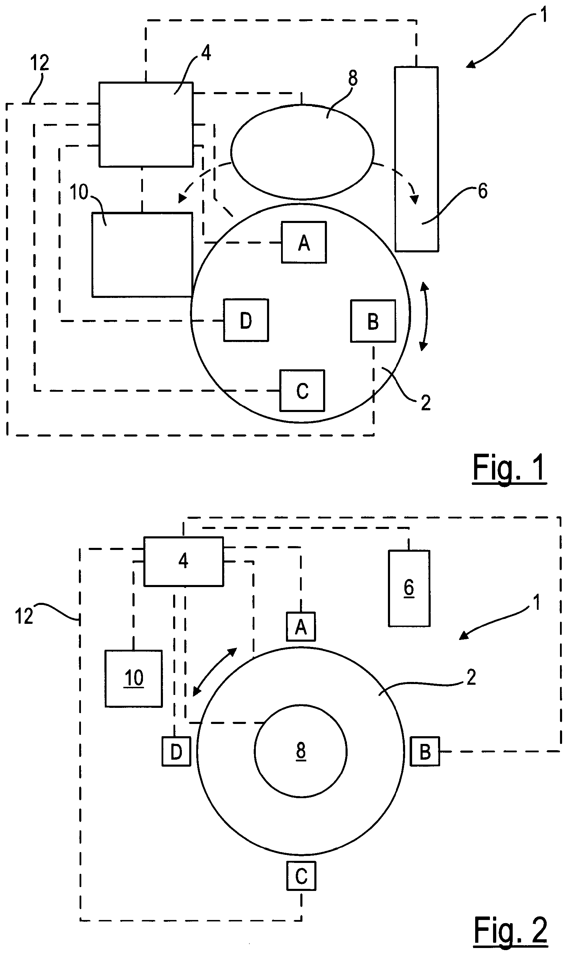

In der Figur 1 ist das Grundkonzept des erfindungsgemäßen Kabelverarbeitungscenters 1 dargestellt. Demgemäß hat dieses einen Rundtisch 2, auf dem beispielhaft vier der Bearbeitungsmodule A, B, C, D angeordnet sind. Der Antrieb des Rundtischs 2 und die einzelnen Bearbeitungsmodule A, B, C. D werden über einen Steuerrechner 4 (CPU) einer Steuereinheit angesteuert. Über diesen können alle Funktionskomponenten des Kabelverarbeitungscenters 1 angesteuert werden. Die Zuführung der zu verarbeitenden Kabel-Rohlinge erfolgt aus einem Zuführ-Speicher 6, der beispielsweise als Köcher-Speicher ausgeführt ist und vorzugsweise ein mobiler Speicher 6 ist, der auf einfache Weise in die angestellte Übergabeposition verbringbar ist.

Dieser Speicher 6 kann auch mit einem Entnahmespeicher ausgeführt sein, in dem die konfektionierten Kabel abgelegt werden. Bevorzugt wird es jedoch, einen derartigen Entnahmespeicher losgelöst vom Zuführ-Speicher auszuführen, so dass eine flexiblere Anpassung ermöglicht ist.

Wie erwähnt, ist der Rundtisch 2 über einen nicht dargestellten Antrieb drehbar und/oder auch in der Höhe verstellbar, so dass das jeweilige Bearbeitungsmodul A, B, C, D mit Bezug zu einer Bearbeitungsstation 8 ausgerichtet werden kann. Im Bereich dieser Bearbeitungsstation 8 ist erfindungsgemäß ein Roboter positioniert, der das Handling der zu konfektionierenden Kabel übernimmt und somit zumindest ein Teil der Bearbeitungsstation 8 ist. Je nach Art der Kabelkonfektion können auf einem derartigen Rundtisch 2 unterschiedliche Tisch-Bearbeitungsmodule A, B, C, D (Tischmaschinen) flexibel kombiniert werden, um damit eine Liste von Kabeln/Drähten zu verarbeiten.

Wie weiterhin in der Figur 1 dargestellt, kann der Bearbeitungsstation 8 (Handlingsgerät/Roboter) ein Zwischenspeicher 10 zugeordnet sein, in dem Kabel während der Konfektion zwischengelagert werden können. So ist es beispielsweise möglich, ein Ende der Kabel mit einem ersten Kontakt zu versehen und dieses in dem Zwischenspeicher 10 abzulegen. Zum Vercrimpen eines weiteren Kontakts auf das noch freie Ende des Kabels wird dieses dann aus dem Zwischenspeicher 10 entnommen und wieder einem Bearbeitungsmodul, beispielsweise dem Crimpautomaten, zur weiteren Verarbeitung zugeführt.

Steuer- und Signalleitungen 12 zwischen dem Steuerrechner 4 und den einzelnen Komponenten sind in den Figuren gestrichelt angedeutet.

Im Folgenden wird beispielhaft ein Konfektionierzyklus erläutert.

Der Roboter entnimmt dabei die Kabel-Rohlinge aus dem Speicher 6 und verbringt diese zu dem Bearbeitungsmodul A, das sich an der in Figur 1 dargestellten Bearbeitungsposition befindet. Dies kann beispielsweise eine Abläng-/Abisoliereinheit sein, über die das Kabel auf Maß gebracht und das Kabelende abisoliert wird.

Der Roboter übernimmt dann das abgelängte Kabelende aus dem Bearbeitungsmodul A. Der Rundtisch 2 wird angesteuert, um das nächste Bearbeitungsmodul in die Bearbeitungsposition zu bringen. In diesem wird dann in entsprechender Weise das Kabel über die Bearbeitungsstation 8, insbesondere den Roboter zugeführt und weiter bearbeitet. Die Bearbeitungsreihenfolge muss nicht notwendigerweise der Reihenfolge der Bearbeitungsmodule auf dem Rundtisch entsprechen (A -> B -> C -> D -> Entnahmespeicher). Prinzipiell können die Bearbeitungsmodule A, B, C, D in beliebiger Reihenfolge in Wirkeingriff gebracht werden. Auf diese Weise können Umrüstzeiten des Kabelkonfektionscenters minimiert werden, da beispielsweise nicht benötigte Bearbeitungsmodule nicht entnommen werden müssen, sondern einfach nicht in die Bearbeitungsposition gebracht werden.

Das Kabelverarbeitungscenter 1 ist so ausgeführt, dass unterschiedliche Drahtquerschnitte beispielsweise (0,5 - 6 qmm) flexibel abgerollt und zugeführt werden.

Wie erläutert, sollen auf einem Bearbeitungsmodul A, B, C, D diese Drähte abgelängt werden. Im Anschluss daran kann beispielsweise das vorkonfektionierte Kabel mit einem Kontakt vercrimpt werden.

Hierzu stehen mehrere Stationen/Module zur Verfügung, um an den Kabelenden unterschiedliche Kontakte, beispielsweise Aderendhülsen, mit und ohne Kunststoffkragen, gedrehte Kontakte etc. zu verarbeiten.

Prinzipiell ist es auch möglich, an dem Kabelverarbeitungscenter 1 nur Drähte, Koax-Kabel, etc. zu verarbeiten. Zusätzlich oder ergänzend kann eine Tüllenstation oder ein sonstiges Beschriftungssystem vorgesehen werden.

Alternativ kann auch eine Beschriftung/Kennzeichnung mittels eines Druckers (Tintenstrahldrucker, spezielle Markierer, Thermotransferdrucker) oder mittels eines Lasers erfolgen, wobei die Beschriftung vorzugsweise direkt auf dem Kabelleiter erfolgt.

Der Roboter ist bei einer nicht beanspruchten Ausführung stationär im Bereich der Bearbeitungsstation angeordnet. Prinzipiell ist es jedoch auch möglich, den Roboter und somit die Bearbeitungsstation verfahrbar auszuführen.

Bei einer nicht beanspruchten Lösung kann der Rundtisch 2 feststehend ausgeführt sein und der Roboter (Bearbeitungsstation 8) entlang des Umfangs des Rundtischs 2 verfahrbar ausgeführt sein, so dass die Kabel bei den einzelnen Bearbeitungsschritten durch den Roboter den Bearbeitungsmodulen A, B, C, D zugeführt werden. Diese Variante wird in Figur 1 durch die beiden gestrichelten Pfeile angedeutet, die die Beweglichkeit der Bearbeitungsstation 8, die beispielsweise mit einem Roboter/Handlingsgerät ausgeführt ist, entlang des Umfangs des Rundtischs 2 kennzeichnen. Dabei ist es auch durchaus möglich, dass der Rundtisch 2 selbst noch drehbar ist (hierauf wurde bereits vorstehend hingewiesen).

Figur 2 zeigt ein nicht beanspruchtes Ausführungsbeispiel, bei dem die Bearbeitungsstation 8 (beispielsweise mit dem Roboter/Handlingsgerät) auf dem Rundtisch 2 fixiert ist während die Bearbeitungsmodule A, B, C, D entlang des Außenumfangs des Rundtischs 2 in einer vorzugsweise fixierten Position angeordnet sind. Die Positionen des Speichers 6, des Steuerrechners (CPU) 4 und des Zwischenspeichers 10 entsprechen funktional den jeweiligen Positionen bei den Ausführungsbeispielen gemäß Figur 1. Bei dieser Variante wird somit durch eine entsprechende Ansteuerung des Rundtisch-Antriebs, mit dem dieser um einen vorbestimmten Dreh-Winkel verstellt wird, die Bearbeitungsstation 8 mit Bezug zum jeweiligen Bearbeitungsmodul A, B, C, D ausgerichtet, so dass entsprechend die vorbeschriebenen Fertigungsschritte durch Ansteuerung des Rundtischs 2 und des darauf positionierten Roboters (Bearbeitungsstation 8) und der damit einhergehenden Relativpositionierung der Bearbeitungsstation 8 mit Bezug zu dem jeweils in Wirkeingriff bringbaren Bearbeitungsmodul A, B, C, D durchgeführt werden. Die Positionierung des Zwischenspeichers 10 und des Speichers 6 erfolgt bei dieser Variante selbstverständlich so, dass diese über die Bearbeitungsstation (Handlingsgerät, Roboter) 8 erreichbar sind und somit beispielsweise die Kabel dem jeweiligen Bearbeitungsmodul A, B, C, D zuführbar sind.

Prinzipiell sind auch Hybridformen möglich, bei denen Bearbeitungsmodule und Komponenten der Bearbeitungsstation (Roboter, Handlingsgerät) sowohl auf/an dem Rundtisch 2 als auch an dessen Umfang positioniert sind.

Offenbart ist ein Kabelverarbeitungscenter mit einer Vielzahl von auf oder an einem Rundtisch angeordneten Bearbeitungsmodulen.

### BERICHTIGTES BLATT (REGEL 91) ISA/EP

### Bezugszeichen

- 1: Bearbeitungscenter
- 2: Rundtisch
- 4: Steuerrechner / CPU
- 6: Speicher
- 8: Bearbeitungsstation
- A, B, C, D: Bearbeitungsmodul
- 10: Zwischenspeicher
- 12: Steuer-/Signal-/Energieversorgungsleitungen

## Patentansprüche

1. Kabelverarbeitungscenter mit einer Vielzahl von Bearbeitungsmodulen (A, B, C, D), die mittels einer gemeinsamen Steuereinheit des Kabelverarbeitungscenters angesteuert sind und ausgelegt sind, Kabel mit unterschiedlichen Querschnitten zu konfektionieren und/oder Kabelenden mit Kontakten oder dergleichen zu versehen, mit einem Speicher (6) für die zu verarbeitenden Kabelquerschnitte und/oder die konfektionierten Kabel, und mit einem Rundtisch (2), auf dem die Bearbeitungsmodule (A, B, C, D) positioniert sind und der mit einem Antrieb versehen ist, um jeweils ein Bearbeitungsmodul (A, B, C, D) mit Bezug zu zumindest einer im Umfangsbereich des Rundtischs (2) angeordneten Bearbeitungsstation (8) des Kabelverarbeitungscenters auszurichten, **dadurch gekennzeichnet, dass** die zumindest eine Bearbeitungsstation (8) entlang des Umfangs des Rundtischs (2) verfahrbar ausgeführt ist, so dass die Kabel bei den einzelnen Bearbeitungsschritten durch die Bearbeitungsstation (8) den Bearbeitungsmodulen (A, B, C, D) zugeführt werden.

2. Kabelverarbeitungscenter nach Patentanspruch 1, wobei die Bearbeitungsstation (8) ein Handlingsgerät hat, das ausgelegt ist, Kabel aus dem Speicher (6) zu entnehmen und an das jeweilige, mit Bezug zur Bearbeitungsstation (8) ausgerichtete Bearbeitungsmodul (A, B, C, D) zu übergeben oder aus einem Bearbeitungsmodul (A, B, C, D) zu entnehmen und an ein weiteres Bearbeitungsmodul (A, B, C, D) oder einen Entnahmespeicher zu übergeben.

3. Kabelverarbeitungscenter nach Patentanspruch 2, wobei das Handlingsgerät ausgelegt ist, das Kabel beim Verstellen des Rundtischs (2) in einer Zwischenstation zu halten.

4. Kabelverarbeitungscenter nach einem der vorhergehenden Patentansprüche, wobei die Bearbeitungsmodule (A, B, C, D) ausgewählt sind, aus der Gruppe Ablängautomat, Crimpautomat, Tüllenstation, Druckstation, Abisolierautomat.

5. Kabelverarbeitungscenter nach einem der vorhergehenden Patentansprüche, wobei das Handlingsgerät ein von der Steuereinheit angesteuerter Roboter ist.

6. Kabelverarbeitungscenter nach einem der vorhergehenden Patenansprüche, wobei zumindest einige Bearbeitungsmodule (A, B, C, D) einzeln betreibbare Bearbeitungseinheiten sind.

7. Kabelverarbeitungscenter nach einem der vorhergehenden Patentansprüche, wobei der Entnahmespeicher als Köcher-Speicher oder linearer Speicher ausgeführt ist.

8. Kabelverarbeitungscenter nach einem der vorhergehenden Patentansprüche, mit einem Zwischenspeicher (10) zur Zwischenlagerung von Kabeln.

## Claims

1. A wire processing center with a plurality of processing modules (A, B, C, D), which are driven via a common control unit of the wire processing center and are configured to assemble wires with different cross-sections and/or to provide wire ends with contacts or the like, with a storage (6) for the wire cross-sections to be processed and/or the assembled wires, and with a round table (2), on which the processing modules (A, B, C, D) are positioned and which is provided with a drive for aligning a processing module (A, B, C, D) in each case with respect to at least one processing station (8) of the wire processing center arranged in the circumferential region of the round table (2), **characterized in that** the at least one processing station (8) is configured to be movable along the circumference of the round table (2), so that the wires are fed to the processing modules (A, B, C, D) by the processing station (8) during the individual processing steps.

2. The wire processing center according to patent claim 1, wherein the processing station (8) has a handling device which is configured to withdraw wire from the storage (6) and transfer it to the respective processing module (A, B, C, D) aligned with respect to the processing station (8) or to remove wire from a processing module (A, B, C, D) and transfer it to a further processing module (A, B, C, D) or a withdrawal storage.

3. The wire processing center according to claim 2, wherein the handling device is configured to hold the wire in an intermediate station when the round table (2) is moved.

4. The wire processing center according to one of the preceding patent claims, wherein the processing modules (A, B, C, D) are selected from the group consisting of automatic cutting machine, automatic crimping machine, grommet station, printing station, automatic stripping machine.

5. The wire processing center according to one of the preceding patent claims, wherein the handling device is a robot driven by the control unit.

6. The wire processing center according to one of the preceding patent claims, wherein at least some processing modules (A, B, C, D) are individually operable processing units.

7. The wire processing center according to one of the preceding patent claims, wherein the withdrawal storage is configured as quiver storage or linear storage.

8. The wire processing center according to one of the preceding patent claims, with an intermediate storage (10) for intermediately storing of wires.

## Revendications

1. Centre de traitement de câbles avec une pluralité de modules de traitement (A, B, C, D) qui sont commandés au moyen d'un dispositif de commande commun du centre de traitement de câbles et sont conçus pour confectionner des câbles avec différentes sections transversales et/ou pour doter des extrémités de câble de contacts ou similaires, avec un accumulateur (6) pour les sections transversales de câbles à traiter et/ou les câbles confectionnés, et avec une table circulaire (2) sur laquelle les modules de traitement (A, B, C, D) sont positionnés et qui est dotée d'un entraînement pour orienter respectivement un module de traitement (A, B, C, D) par rapport à au moins un poste de traitement (8) du centre de traitement de câbles disposé dans la zone périphérique de la table circulaire (2), **caractérisé en ce que** le au moins un poste de traitement (8) est conçu de manière déplaçable le long de la périphérie de la table circulaire (2), de sorte que les câbles soient acheminés aux modules de traitement (A, B, C, D) par le poste de traitement (8) lors des étapes de traitement individuelles.

2. Centre de traitement de câbles selon la revendication 1, dans lequel le poste de traitement (8) présente un appareil de manipulation qui est conçu pour retirer des câbles de l'accumulateur (6) et les transférer au module de traitement (A, B, C, D) respectif, orienté par rapport au poste de traitement (8), ou les retirer d'un module de traitement (A, B, C, D) et les transférer à un module de traitement supplémentaire (A, B, C, D) ou à un accumulateur de prélèvement.

3. Centre de traitement de câbles selon la revendication 2, dans lequel l'appareil de manutention est conçu pour maintenir le câble dans un poste intermédiaire lors du déplacement de la table circulaire (2).

4. Centre de traitement de câbles selon l'une quelconque des revendications précédentes, dans lequel les modules de traitement (A, B, C, D) sont sélectionnés parmi le groupe constitué d'un automate de coupe, automate de sertissage, poste passe-fils, poste de pression, automate de dénudage.

5. Centre de traitement de câbles selon l'une quelconque des revendications précédentes, dans lequel l'appareil de manipulation est un robot commandé par le dispositif de commande.

6. Centre de traitement de câbles selon l'une quelconque des revendications précédentes, dans lequel au moins quelques modules de traitement (A, B, C, D) sont des unités de traitement pouvant fonctionner individuellement.

7. Centre de traitement de câbles selon l'une quelconque des revendications précédentes, dans lequel l'accumulateur de prélèvement est conçu en tant qu'accumulateur à carquois ou accumulateur linéaire.

8. Centre de traitement de câbles selon l'une quelconque des revendications précédentes, avec un accumulateur intermédiaire (10) pour le stockage temporaire de câbles.
